# EUROPEAN PATENT SPECIFICATION

(11) **EP 4 079 588 B1**
(45) Date of publication and mention of the grant of the patent: **05.06.2024**
(21) Application number: 21170108.1
(22) Date of filing: 23.04.2021
(51) Int. Cl.: B60T 13/68, B60T 8/32, B60T 8/38, B60T 15/20

(54) **A RELAY VALVE FOR A PNEUMATIC BRAKE SYSTEM**
RELAISVENTIL FÜR EIN PNEUMATISCHES BREMSSYSTEM
SOUPAPE DE RELAIS POUR UN SYSTÈME DE FREINAGE PNEUMATIQUE

(43) Date of publication of application: 26.10.2022
(73) Proprietor: ZF CV Systems Europe BV, 1170 Brussels (BE)
(72) Inventor: RIEDIGER-JANISCH, Karl-Heinz, 30455 Hannover (DE); TOMA, Leszek, 52-013 WROCLAW (PL); HLADIK, Marcin, 55-095 Mirkow (PL); KLUCZKIEWICZ, Wladyslaw, 48-100 Glubczyce (PL); LUBICKI, Tomasz, 51-315 Wroclaw (PL)
(74) Representative: Ohlendorf, Henrike

(56) References cited:
- EP-B1- 0 726 189
- CN-U- 204 296 700
- CN-U- 206 691 102
- DE-C2- 19 510 492

## Description

### TECHNICAL FIELD OF THE INVENTION

The present invention relates to a relay valve for a pneumatic brake system. In particular, the relay valve for the pneumatic brake system is applied in commercial vehicle brake systems.

### BACKGROUND OF THE INVENTION

Conventional relay valves include a variety of methods and devices to prevent backflow of the pressurized air when said pressurized air is supplied from an independent fluid source. The importance of said methods and devices to prevent backflow of the pressurized air is found to be more important because a constant pressure magnitude needs to be maintained in a supply line connected to said relay valves.

It is however often the case that said devices for preventing backflow of the pressurized air is either complex and are positioned at locations with a brake circuit that may increase the costs and/or time involved in assembling said devices to the existing brake circuit. One such relay valve is disclosed in US patent publication 5624163.

DE19510492C2 relates to a relay valve that has a control valve piston activated by pressure from a reservoir directly through a brake pedal valve and also through an electrically operated pressure regulator. The braking system is operated by pressure from an outlet in the relay valve, provided by the inlet, when the main valve opens. CN204296700U discloses a relay valve which comprises a valve body and a piston component. The valve body comprises a piston cavity, the piston component comprises a piston rod movably arranged in the piston cavity, a plurality of control channels communicated with the piston cavity are formed in the valve body, and the relay valve further comprises a whole rod sleeve structure arranged between the wall of the piston cavity and the piston rod. CN206691102U relates to a relay combination valve, including an upper valve body, a middle valve body and a lower valve body. Furthermore, the upper valve body and the middle valve body, and the lower valve body are respectively connected by screws. A reserved hole is arranged at both ends of the upper valve body. The relay combination valve further discloses a double check valve.

Accordingly, it is one of the objectives of the present invention that provides a device for preventing backflow of the pressurized air from an inlet of the relay valves that is not only functionally less complicated, but also easy to assemble and costs less for the manufacturing.

### SUMMARY OF THE INVENTION

In accordance with the present invention, a relay valve for a pneumatic brake system is disclosed. The relay valve comprises a housing, a first control pressure port receiving a first control brake pressure for applying, preferably a parking brake, a second control pressure port receiving a second control brake pressure for applying, preferably a service brake. It is noted that, for instance, a parking brake can be applied through the activation of a hand brake valve present in the driver's cabin whereas a service brake is activated via a brake pedal provided in the driver's cabin. Furthermore, in accordance with the present invention, the second control brake pressure is configured to be independently applied to that of the first control brake pressure, preferably the first control brake pressure and second control brake pressure are received from at least two independent pressurized fluid sources. The relay valve further comprises a pressurized fluid inlet for receiving supply pressure from at least two independent pressurized fluid sources and selectively take the supply pressure from only one of the at least two independent pressurized fluid sources, a pressurized fluid outlet selectively pneumatically connected with the pressurized fluid inlet when the pressure received either at the first control pressure port or at the second control pressure port is higher than a predetermined threshold, and wherein the relay valve further comprises a check valve coaxially positioned with respect to the pressurized fluid inlet within the housing.

The present invention overcomes some of the technical problems present in the prior art (such as US 5624163 cited above in the background section) by advantageously providing the check valve within the housing of the relay valve. In particular, the check valve is merely provided as an insert at pressurized fluid inlet P1. The simplified construction of the check valve and its individual features are explained in detail in association with the accompanying figures.

The further advantageous embodiments are listed in the dependent claims.

In accordance with a preferred embodiment of the present invention, the check valve mentioned above is sung fit to an internal surface of the pressurized fluid inlet (of the relay valve). The use of snug fit check valve at the inlet prevents any fluid leakage between the external surface of the check valve and the internal surface of the pressurized fluid inlet. Furthermore, the provision of snug fit assembly of the check valve at the pressurized fluid inlet of the relay valve makes the check valve easy to assemble or insert into the pressurized fluid inlet.

In accordance with the present invention, the check valve is a two-piece check valve wherein first and second pieces of said two-piece check valve are coaxial to each other and form a preassembled unit to be inserted into the pressurized fluid inlet. In the present invention, the first and second pieces (i.e., the two-piece formation of the check valve) are configured to be preassembled before the preassembled unit can be inserted into pressurized fluid inlet P1. As can be ascertained by the skilled person, this preassembled unit can be inserted into pressurized fluid inlet P1 without complicated procedure during the assembly of the relay valve.

In accordance with the present invention, the check valve, in particular the first piece, includes a plurality of holes for letting the pressurized air pass through it and impinge on the second piece. For instance, having more than one hole i.e., the plurality of holes within the first piece of the check valve establishes better and/or more equal force transmission of pressurized air impinging on the first piece onto the second piece. Moreover, within the context of the present invention, the design of the second piece may enable only having the plurality of the holes (but not a singular hole) in the first piece of the check valve.

In accordance with yet another preferred embodiment of the present invention, the relay valve of any one of the above embodiments includes the check valve with the first piece with a receiving slot and the second piece includes at least one circular extension, wherein the first and second pieces are assembled such that the receiving slot accommodates the at least one circular extension of the second piece to form a snap fit. Such an arrangement of the snap fit between the first and second pieces is for providing a preassembled unit of the check valve.

In accordance with any one of the above-mentioned embodiments, the plurality of holes of the check valve are circumferentially symmetrically distributed in the second piece with respect to a geometric center point of the second piece. The technical advantage of providing the plurality of holes in such a circumferentially symmetrically distributed fashion is to enable application of almost equal pressure on the second piece of the check valve, which pressure lifts the second piece from a surface of the first piece.

In accordance with a preferred embodiment of the present invention, the first piece and the second piece are made of elastomeric material. For instance, this would enable the skilled person to not vary the material requirements of the first and second pieces drastically, but to enable varying of the dimensional requirements of the first and second pieces of the check valve to achieve the required function of enabling a unidirectional flow.

In accordance with another preferred embodiment of the present invention, the first piece is made of material that is harder than the material used for the second piece. For instance, by using a harder material for the first piece, the structural rigidity of the check valve can be maintained while at the same time providing a leakproof sealing between the second piece of the check valve and an internal surface of the pressurized fluid inlet. This leakproof sealing is enabled because of the flexible or elastic behavior exhibited by the second piece being sandwiched between the first piece made of harder material and the internal surface of the pressurized fluid inlet.

In accordance with any one of the above-mentioned embodiments, the pressurized air impinging on the first piece enables lifting of the second piece temporarily from an external surface of the second piece such that the pressurized air enters a relay valve chamber of the relay valve.

Furthermore, a pneumatic brake system is disclosed, which is preferably an Anti-lock Braking System (ABS), comprising the relay valve of any one of the above-captioned embodiments. Still furthermore, a commercial vehicle comprising the pneumatic brake system as mentioned above is disclosed.

### BRIEF DESCRIPTION OF THE ACCOMPANYING DRAIWNGS

Fig. 1 illustrates an exemplary brake system layout for an Anti-lock Braking System (ABS) in accordance with an embodiment of the present invention;
Fig. 2 illustrates a relay valve used in an ABS system in accordance with an embodiment of the present invention;
Fig. 2a illustrates an enhanced view of a portion of a relay valve shown in Fig. 2 in accordance with an embodiment of the present invention; and
Figs. 3, 4a, 4b and 4c illustrate a check valve and its details as used in a relay valve of an ABS system in accordance with an embodiment of the present invention.

### DETAILED DESCRIPTION OF THE ACCOMPANYING DRAWINGS

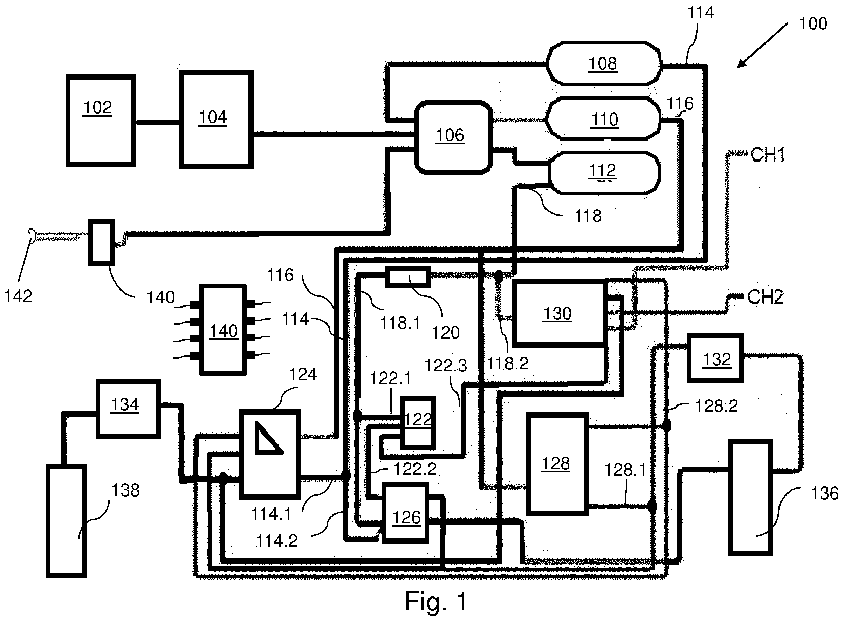

Fig. 1 illustrates an exemplary brake system layout for an Anti-lock Braking System (ABS) 100 in accordance with an embodiment of the present invention.

ABS 100 includes a compressor 102, which functions with the help or assistance form the output power from an international combustion (IC) engine (not shown in fig. 1) of a vehicle or an input shaft (not shown in fig. 1) of compressor 102 is connected to an output crankshaft (not shown in fig. 1) of the IC engine. The compressed air from compressor 102 is thereafter sent to an air-drying and/or filtering unit 104. For instance, compressor 102 assists ABS 100 in creating and maintaining the pressure preferably in the range of 7.2 and 8.1 bar within the brake circuit. The filtered, dried air from the air-drying and/or filtering unit 104 reaches a multi-circuit protection valve 106 that transmits the air to three reservoirs I, II, and III (labeled as reservoirs 108, 110 and 112) as shown in fig. 1. For instance, multi-circuit protection valve 106 can be a four-circuit protection valve or quadruple-circuit protection valve. One of the outlets of four-circuit protection valve 106 is connected to safety valve 144 for limiting the pressure within the brake circuit within a permissible range. In case of excess pressure present within the brake circuit is released via outlet 142 as allowed or permitted by safety valve 144.

Further, the air from first and second reservoirs 108, 110 are connected to a foot brake valve 124 via first and second connecting lines 114 and 116, respectively. In the figure, it is shown that a first part 114.1 of first connecting line 114 leads to foot brake valve 124. In accordance with one exemplary implementation, each of first and second connecting lines 114 and 116 connected to foot brake valve 124 could be assigned for supplying control brake pressure the front and rear axles of the vehicle. This is derivable from Fig. 1 where one of the outlets of foot brake valve 124 leads to ABS valve 134 of the front axle where another of the outlets of foot brake valve 124 leads to ABS valve 132 of the rear axle.

The compressed air from third reservoir 112 leads to hand brake valve 122 via lines 118, 118.1 and 122.1 and a relay valve 126 via line 122.2 according to the present embodiment. Relay valve 126 can be activated by control pressure received from e.g., hand brake valve 122 via e.g., a control line 122.2. It is, for instance, recognizable that hand brake valve 122 of ABS 100 is for activating the parking brake of the vehicle.

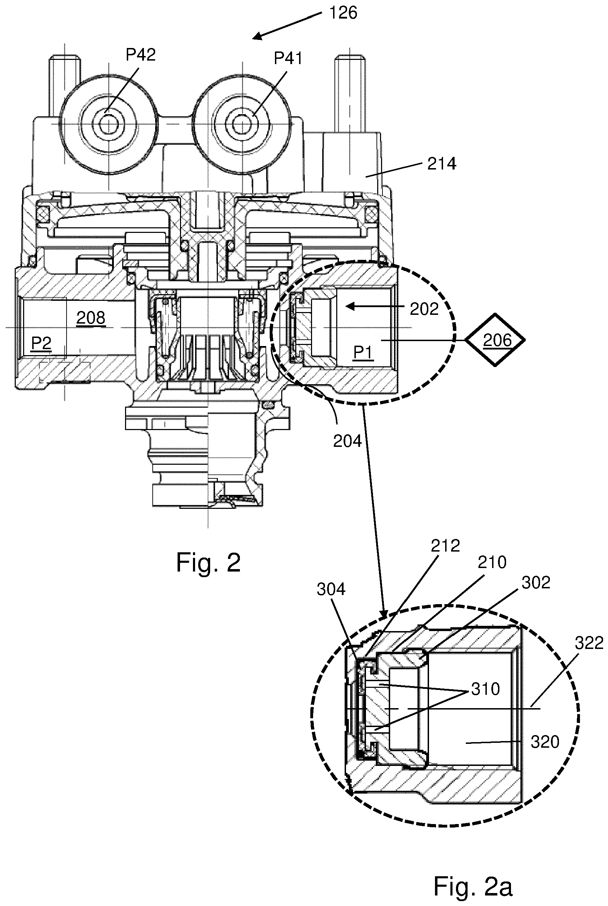

It is noted that relay valve 126 is explained in detailed in the embodiments associated with Figs. 2, 2a, 3, 4a -4c. Further, a second part 114.2 of first connecting line 114 from reservoir 108 leads to relay valve 126, as can be taken from fig. 1. The outlet from relay valve 126 reaches directly to a first brake actuator 136 associated with one of the wheels (not shown in Fig. 1) of the vehicle.

Hand brake valve 122 furthermore is connected to a trailer control valve 130 via control line 122.3. ABS valve 132 is arranged before brake actuator 136. ABS valve 132 is similar to the construction of the conventional ABS valves and can be electronically controlled to open and/or close for varying time durations in order to arrive at an optimum condition taking the momentary braking conditions into account.

A brake modulator 128 which receives the supply pressure from reservoir 110 via line 116 is configured to selectively transmit the supply pressure to ABS valve 132 via first supply line 128.1 and to trailer control valve 130 via second supply line 128.2. Trailer control valve 130 is connected to the trailer brakes (not shown in fig. 1) via a coupling 'CH2' (a.k.a. "trailer coupling"). From the trailer coupling, the brake pressure reaches respective trailer brake cylinders (not shown in the enclosed figures).

ABS 100 additionally includes an electronic control unit 140 (or ECU), which can, for instance, be wirelessly connected to other components within ABS 100. What is, however, not shown in Fig. 1 is that, ABS 100 may have one or more pressure sensors at different connection lines such as 114, 116, 118 and their sub-divisions such as 114.1, 114.2,118.1 throughout ABS 100 to determine whether there are any disconnection or breaking down in the pressure lines or if there are any drops in the pressure in any of the lines. The output of the determination from the one or more pressure sensors is then transferred to ECU 140, which determines, for instance, that there is indeed a pressure drop in one of the connecting lines and may determine corrective measures to be taken (along with a warning signal to the driver of the vehicle).

Further details regarding ABS system 100 is explained in conjunction with the details that is necessary to the extent the explanation regarding relay valve 126 of the present invention.

Fig. 2 illustrates relay valve 126 used in ABS system 100 in accordance with an embodiment of the present invention.

Relay valve 126 for a pneumatic brake system 100. Relay valve 126 comprises a housing 214, a first control pressure port P42 receiving a first control brake pressure for applying e.g., a parking brake, a second control pressure port P41 receiving a second control brake pressure for applying a service brake, wherein the second control brake pressure is configured to be independently applied to that of the first control brake pressure, preferably the first control brake pressure and second control brake pressure are received from at least two independent pressurized fluid sources 110, 112 (see reservoirs 110 and 112 of Fig. 1). In the present embodiment, the parking brake may refer to the control pressure received from hand brake valve 122 (see Fig. 1), which is typically present within a driver's cabin. In the same embodiment, the service brake refers to the control pressure received from foot brake valve 124 (see Fig. 1).

Relay valve 126, according to the present embodiment, further comprises a pressurized fluid inlet (P1) for receiving supply pressure from at least two independent pressurized fluid sources 110, 112 and selectively take the supply pressure from only one of the at least two independent pressurized fluid sources 110, 112, a pressurized fluid outlet (P2) selectively pneumatically connected with the pressurized fluid inlet P1 when the pressure received either at first control pressure port P42 or at second control pressure port P41 is higher than a predetermined threshold, and wherein relay valve 126 further comprises a check valve 202 coaxially positioned with respect to the pressurized fluid inlet P1 within housing 214.

In general, it is known in the prior art such as US5624163A, which is also cited in the background section above, to provide the check valves "outside" the housing of the conventional relay valves due the constructional complexity involved in incorporating such a check valve within the housing of the conventional relay valve. Furthermore, the design of the relay valves and their corresponding check valves should be adjusted so that the individual components do not become over-expensive and at the same time provide easy assembly procedure. In convention check valves, the structure may include e.g., a spring and a ball or spool to open and close the valve for allowing unidirectional flow.

The present invention overcomes the above said technical problems by advantageously providing check valve 202 within housing 214 as shown in figs. 2 and 2a. In particular, check valve 202 is merely provided as an insert at pressurized fluid inlet P1. The simplified construction of check valve 202 and its individual features will be explained in detail in association with figures 2a, 3, 4a to 4c of the present application.

In accordance with an embodiment, as shown in Fig. 2, pressurized fluid inlet P1 is connected to a filter 206, or an air filter for removing moisture and impurities in air entering inlet P1.

Fig. 2a illustrates an enhanced view of a portion of a relay valve shown in Fig. 2 in accordance with the same embodiment or a different advantageous embodiment of the present invention. In this advantageous embodiment, as also shown in Fig. 2a check valve 202 is sung fit to an internal surface of the pressurized fluid inlet P1. For instance, the internal surface can be an inner generally cylindrical surface 320 as shown in Fig. 2a. Inner generally cylindrical surface 320 has at notches 210 and 212 so that the position of check valve 202 is snugly secured.

The presence of notches 210 und 212 is particularly advantageous because in a typical assembly line of manufacturing relay valve 126, check valve 202 can be inserted as a unit along inner generally cylindrical surface 320 without the difficulty of aligning a central axis of check valve 202 with central axis 322 of pressurized fluid inlet P1. In other words, inner generally cylindrical surface 320 aligns the position of check valve 202 automatically due to its generally cylindrical structure to be coaxial. This helps in achieving the minimum assembly line efficiency when check valve 202 must be assembled to relay valve 126.

Furthermore, Fig. 2a illustrates check valve 202 as a two-piece check valve wherein first and second pieces 302, 304 of said two-piece check valve are coaxial to each other and form a preassembled unit to be inserted into the pressurized fluid inlet P1. In particular, first and second pieces 302, 304 are configured to be preassembled before the preassembled unit can be inserted into pressurized fluid inlet P1. As mentioned in the previous paragraph too, this preassembled unit can be inserted into pressurized fluid inlet P1 without complicated procedure.

In continuation of the present embodiment, Fig. 2a also shows that check valve 202, in particular, first piece 302 of check valve 202 includes a plurality of holes 310 for letting the pressurized air pass through it and impinge on the second piece 304. This feature can be clearly realized with the aid of Fig. 2a where two holes 310 are shown due to the cross-sectional view or an enhanced cross-sectional view of a section of relay valve 126 has been displayed. Naturally, having more than one hole 310 within first piece 302 establishes better and/or more equal force transmission of pressurized air impinging on first piece 302 onto second piece 304.

Further details of check valve 202 in association with relay valve 126 of the present invention are explained in the following sections of the detailed description.

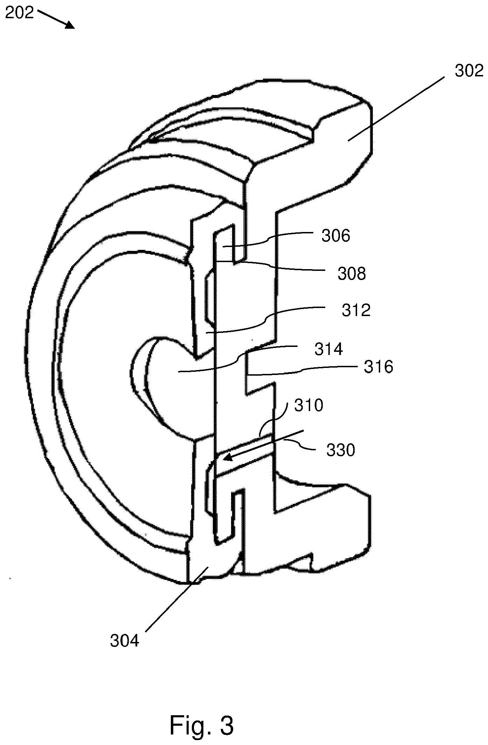

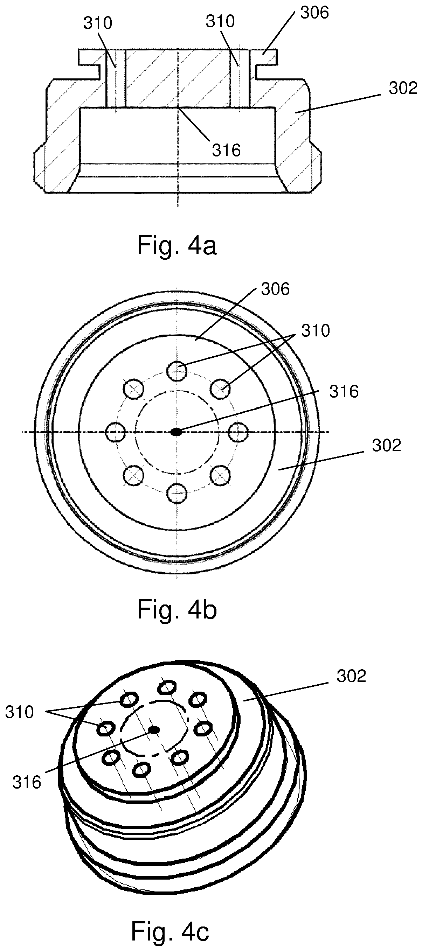

Figs. 3, 4a, 4b and 4c illustrate check valve 202 and its details as used in relay valve 126 of ABS system 100 in accordance with the present invention.

As can be seen in Fig. 3, first piece 302 includes a receiving slot 308 and second piece 304 includes at least one circular extension 306, wherein first and second pieces 302, 304 are assembled such that receiving slot 308 accommodates said at least one circular extension 306 of second piece 304 to form a snap fit. Such an arrangement of snap fit between first and second pieces 302 and 304 is for providing a preassembled unit of check valve 202 as explained above in reference to Figs. 2 and 2a.

Working mode of check valve 202 is briefly explained herewith. As can be seen in fig. 3, check valve 202 and its first and second pieces 302 and 304 can be clearly noticed. In one of the embodiments of the present invention, second piece 304 is made of an elastomeric material which enables the user to expand and place it at a gap (not labeled in fig. 3) present at circular extension 306. This forms a snap fit between first and second pieces 302 and 304. It is also recognizable that second piece 304 is flexible enough to move when the pressurized air enters via hole 310 (only one hole 310 is shown in fig. 3, but first piece 302 has plurality of holes 310). When the pressurized air via hole 310 impinges on second piece 304, it lifts second piece 304 (briefly) off surface 314 of first piece 302. The direction of flow of the pressurized air through hole 310 is shown with the help of arrow mark 330. For instance, in Fig. 3, second piece 304 includes a contact part 312 of second piece 304 touching surface 314 of first piece 302. It may be derivable that, in order to let the pressurized fluid to pass through check valve 202, contact part 312 of second piece 304 should be lifted off surface 314.

It is briefly noted that the elastomeric material and its composition may have to be carefully chosen considering the pressure created by the pressurized fluid from port P1. In particular, the material of second piece 304 needs to be lifted off surface 314 as long as there is a flow of pressurized air through hole 310.

In accordance with an embodiment, both first piece 302 and second piece 304 of check valve 202 are made of the elastomeric material. In the present embodiment, as can also be taken from fig. 3, the thickness of the wall of first piece 302 is larger than the thickness of second piece 304. Thus, the pressure applied via e.g., port or inlet P1 (see fig. 2) does not deform first piece 302 but lifts second piece 304 off surface 314 of first piece 302. As a result, despite having first piece 302 and second piece 304 made of the same material, the functionality of check valve 202 can be achieved due to the varying wall thickness of first and second pieces 302 and 304.

Furthermore, as can be realized from Fig. 4b, it is preferred that plurality of holes 310 are circumferentially symmetrically distributed in second piece 304 with respect to a geometric center point 316 of second piece 304. The technical advantage of providing plurality of holes 310 in such a circumferentially symmetrically distributed fashion is to enable equal pressure on second piece 304, which in turn lifts second piece 304 from surface 314 of first piece 302.

It is also preferred, that first piece 302 is made of material that is harder than the material used for second piece 304.

As also explained above, the pressurized air impinging on first piece 302 (and passing through holes 310) enables lifting of second piece 304 temporarily from an external surface 314 of second piece 304 such that the pressurized air enters a relay valve chamber 204 of relay valve 126.

### List of reference signs (part of the description)

- 100 -: ABS or an exemplary pneumatic brake system
- 102 -: compressor
- 104 -: air-drying and/or filtering unit
- 106 -: multi-circuit protection valve
- 108 -: first reservoir
- 110 -: second reservoir
- 112 -: third reservoir
- 114 -: first connecting line starting from reservoir 108
- 116 -: second connecting line starting from reservoir 110
- 118 -: third connecting line starting from reservoir 112
- 120 -: a check valve for third connecting line 118
- 122 -: hand brake valve or parking brake valve
- 124 -: foot brake valve
- 126 -: relay valve
- 128 -: brake modulator
- 130 -: trailer control valve
- 132 -: first ABS valve
- 134 -: second ABS valve
- 136 -: first brake actuator
- 138 -: second brake actuator
- 140 -: Electron Control Unit (ECU)
- 142 -: outlet
- 144 -: safety valve for limiting the pressure within the brake circuit within a permissible range
- 114.1: - first part of first connecting line 114
- 114.2: - second part of first connecting line 114
- 118.1: - first part of third connecting line 118
- 118.2: - second part of third connecting line 118
- 122.1: - inlet part of hand brake valve 122
- 122.2: - first outlet part of hand brake valve 122
- 122.3: - second outlet part of hand brake valve 122
- 128.1: - first supply line of brake modulator 128
- 128.2: - second supply line of brake modulator 128
- P1 -: pressurized fluid inlet of relay valve 126
- P2 -: pressurized fluid outlet of relay valve 126
- P41 -: second control pressure port of relay valve 126
- P42 -: first control pressure port of relay valve 126
- 202 -: check valve
- 204 -: relay valve chamber
- 206 -: filter
- 208 -: internal surface of pressurized fluid outlet of relay valve 126
- 210, 212 -: notches at pressurized fluid inlet P1 receiving check valve 202
- 214 -: housing
- 302, 304 -: first and second pieces of check valve 202
- 306 -: circular extension
- 308 -: receiving slot
- 310 -: plurality of holes present at first piece 302
- 312 -: contact part of second piece 304 touching surface 314 of first piece 302
- 314 -: external surface of first piece 302
- 316 -: a geometric center point
- 320 -: inner generally cylindrical surface of pressurized fluid inlet P1
- 322 -: central axis of pressurized fluid inlet P1

## Claims

1. A relay valve (126) for a pneumatic brake system (100), comprising
a housing (214);
a first control pressure port (P42) receiving a first control brake pressure for applying, preferably a parking brake;
a second control pressure port (P41) receiving a second control brake pressure for applying, preferably a service brake,
wherein the second control brake pressure is configured to be independently applied to that of the first control brake pressure, preferably the first control brake pressure and second control brake pressure are received from at least two independent pressurized fluid sources (110, 112);
a pressurized fluid inlet (P1) for receiving supply pressure from at least two independent pressurized fluid sources (110, 112) and selectively taking the supply pressure from only one of the at least two independent pressurized fluid sources (110, 112);
a pressurized fluid outlet (P2) being selectively pneumatically connected with the pressurized fluid inlet (P1) when the pressure received either at the first control pressure port (P42) or at the second control pressure port (P41) is higher than a predetermined threshold; and
wherein the relay valve (126) further comprises a check valve (202) coaxially positioned with respect to the pressurized fluid inlet (P1) within the housing (214),
**characterized in that**, the check valve (202) is a two-piece check valve wherein first and second pieces (302, 304) of said two-piece check valve are coaxial to each other and form a preassembled unit to be inserted into the pressurized fluid inlet (P1), and the first piece (302) includes a plurality of holes (310) for letting the pressurized air pass through it and impinge on the second piece (304).

2. The relay valve (126) of claim 1, wherein the check valve (202) is sung fit to an internal surface of the pressurized fluid inlet (P1).

3. The relay valve (126) of claim 1, wherein the first piece (302) includes a receiving slot (308) and the second piece (304) includes at least one circular extension (306), wherein the first and second pieces (302, 304) are assembled such that the receiving slot (308) accommodates said at least one circular extension (306) of the second piece (304) to form a snap fit.

4. The relay valve of any one of the claims 1 and 3, wherein the plurality of holes (310) are circumferentially symmetrically distributed in the second piece (304) with respect to a geometric center point (316) of the second piece (304).

5. The relay valve of any one of the claims 1, 3 and 4, wherein the first piece (302) and the second piece (304) are made of elastomeric material.

6. The relay valve (126) of any one of claims 1, 3, and 4, wherein the first piece (302) is made of material that is harder than the material used for the second piece (304).

7. The relay valve (126) of any one of claims 1, and 3 to 6, wherein the pressurized air impinging on the first piece (302) enables lifting of the second piece (304) temporarily from an external surface (314) of the second piece (304) such that the pressurized air enters a relay valve chamber (204) of the relay valve (126).

8. A pneumatic brake system (100), preferably an Anti-lock Braking System (ABS) (100), comprising the relay valve (126) of any one of the above-captioned claims.

9. A commercial vehicle comprising the pneumatic brake system (100) of claim 8.

## Patentansprüche

1. Relaisventil (126) für ein pneumatisches Bremssystem (100), umfassend
ein Gehäuse (214);
einen ersten Steuerdruckanschluss (P42), der einen ersten Steuerbremsdruck zum Betätigen, vorzugsweise einer Feststellbremse, aufnimmt;
einen zweiten Steuerdruckanschluss (P41), der einen zweiten Steuerbremsdruck zum Betätigen, vorzugsweise einer Betriebsbremse, aufnimmt,
wobei der zweite Steuerbremsdruck konfiguriert ist, um von dem des ersten Steuerbremsdrucks unabhängig betätigt zu werden, wobei vorzugsweise der erste Steuerbremsdruck und der zweite Steuerbremsdruck von mindestens zwei unabhängigen Druckfluidquellen (110, 112) aufgenommen werden;
einen Druckfluideinlass (P1) zum Aufnehmen von Versorgungsdruck von mindestens zwei unabhängigen Druckfluidquellen (110, 112) und zum selektiven Fassen des Versorgungsdrucks von nur einer der mindestens zwei unabhängigen Druckfluidquellen (110, 112);
einen Druckfluidauslass (P2), der mit dem Druckfluideinlass (P1) selektiv pneumatisch verbunden ist, wenn der Druck, der entweder an dem ersten Steuerdruckanschluss (P42) oder an dem zweiten Steuerdruckanschluss (P41) aufgenommen wird, höher als ein zuvor bestimmter Schwellenwert ist; und
wobei das Relaisventil (126) ferner ein Rückschlagventil (202) umfasst, das in Bezug auf den Druckfluideinlass (P1) innerhalb des Gehäuses (214) koaxial positioniert ist,
**dadurch gekennzeichnet, dass** das Rückschlagventil (202) ein zweiteiliges Rückschlagventil ist, wobei ein erstes und ein zweites Teil (302, 304) des zweiteiligen Rückschlagventils koaxial zueinander sind und eine vormontierte Einheit, die in den Druckfluideinlass (P1) einzuführen ist, ausbilden und das erste Teil (302) eine Vielzahl von Löchern (310) einschließt, um die Druckluft durch es hindurchgehen und auf das zweite Teil (304) auftreffen zu lassen.

2. Relaisventil (126) nach Anspruch 1, wobei das Rückschlagventil (202) an einer Innenoberfläche des Druckfluideinlasses (P1) festsitzend angebracht ist.

3. Relaisventil (126) nach Anspruch 1, wobei das erste Teil (302) einen Aufnahmeschlitz (308) einschließt und das zweite Teil (304) mindestens eine kreisförmige Verlängerung (306) einschließt, wobei das erste und das zweite Teil (302, 304) derart montiert sind, dass der Aufnahmeschlitz (308) die mindestens eine kreisförmige Verlängerung (306) des zweiten Teils (304) unterbringt, um einen Schnappsitz auszubilden.

4. Relaisventil nach einem der Ansprüche 1 und 3, wobei die Vielzahl von Löchern (310) in dem zweiten Teil (304) in Bezug auf einen geometrischen Mittelpunkt (316) des zweiten Teils (304) umfangssymmetrisch verteilt sind.

5. Relaisventil nach einem der Ansprüche 1, 3 und 4, wobei das erste Teil (302) und das zweite Teil (304) aus elastomerem Material hergestellt sind.

6. Relaisventil (126) nach einem der Ansprüche 1, 3 und 4, wobei das erste Teil (302) aus einem Material hergestellt ist, das härter als das Material, das für das zweite Teil (304) verwendet wird, ist.

7. Relaisventil (126) nach einem der Ansprüche 1 und 3 bis 6, wobei die Druckluft, die auf das erste Teil (302) auftrifft, ein vorübergehendes Anheben des zweiten Teils (304) von einer Außenoberfläche (314) des zweiten Teils (304) derart ermöglicht, dass die Druckluft in eine Relaisventilkammer (204) des Relaisventils (126) eintritt.

8. Pneumatisches Bremssystem (100), vorzugsweise ein Antiblockiersystem (ABS) (100), umfassend das Relaisventil (126) nach einem der vorstehenden Ansprüche.

9. Nutzfahrzeug, umfassend das pneumatische Bremssystem (100) nach Anspruch 8.

## Revendications

1. Valve relais (126) pour un système de freinage pneumatique (100), comprenant
un boîtier (214) ;
un premier orifice de pression de commande (P42) recevant une première pression de frein de commande pour appliquer, de préférence un frein de stationnement ;
un second orifice de pression de commande (P41) recevant une seconde pression de frein de commande pour appliquer, de préférence un frein de service,
dans laquelle la seconde pression de frein de commande est configurée pour être appliquée indépendamment de celle de la première pression de frein de commande, de préférence la première pression de frein de commande et la seconde pression de frein de commande sont reçues d'au moins deux sources indépendantes de fluide sous pression (110, 112) ;
une entrée de fluide sous pression (P1) pour recevoir la pression d'alimentation d'au moins deux sources indépendantes de fluide sous pression (110, 112) et prendre sélectivement la pression d'alimentation d'une seule des deux sources indépendantes de fluide sous pression (110, 112) ;
une sortie de fluide sous pression (P2) étant sélectivement reliée pneumatiquement à l'entrée de fluide sous pression (P1) lorsque la pression reçue, soit au premier orifice de pression de commande (P42), soit au second orifice de pression de commande (P41), est supérieure à un seuil prédéterminé ; et
dans laquelle la valve relais (126) comprend en outre un clapet anti-retour (202) positionné coaxialement par rapport à l'entrée de fluide sous pression (P1) à l'intérieur du boîtier (214),
**caractérisée en ce que** le clapet anti-retour (202) est un clapet anti-retour à deux pièces dans laquelle les première et seconde pièces (302, 304) dudit clapet anti-retour à deux pièces sont coaxiales l'une à l'autre et forment une unité préassemblée à insérer dans l'entrée de fluide sous pression (P1), et la première pièce (302) comporte une pluralité de trous (310) pour permettre à l'air sous pression de la traverser et de venir percuter la seconde pièce (304).

2. Valve relais (126) selon la revendication 1, dans laquelle le clapet anti-retour (202) est ajusté de manière serrée à une surface interne de l'entrée de fluide sous pression (P1).

3. Valve relais (126) selon la revendication 1, dans laquelle la première pièce (302) comporte une fente de réception (308) et la seconde pièce (304) comporte au moins une extension circulaire (306), dans laquelle les première et seconde pièces (302, 304) sont assemblées de telle sorte que la fente de réception (308) accueille ladite au moins une extension circulaire (306) de la seconde pièce (304) pour former un ajustement par encliquetage.

4. Valve relais selon l'une quelconque des revendications 1 et 3, dans laquelle la pluralité de trous (310) est répartie de manière symétrique dans la seconde pièce (304) par rapport à un point central géométrique (316) de la seconde pièce (304).

5. Valve relais selon l'une quelconque des revendications 1, 3 et 4, dans laquelle la première pièce (302) et la seconde pièce (304) sont faites de matériau élastomère.

6. Valve relais (126) selon l'une quelconque des revendications 1, 3 et 4, dans laquelle la première pièce (302) est faite d'un matériau qui est plus dur que le matériau utilisé pour la seconde pièce (304).

7. Valve relais (126) selon l'une quelconque des revendications 1 et 3 à 6, dans laquelle l'air sous pression qui vient percuter la première pièce (302) permet de soulever temporairement la seconde pièce (304) d'une surface externe (314) de la seconde pièce (304) de telle sorte que l'air sous pression pénètre dans une chambre de valve relais (204) de la valve relais (126).

8. Système de freinage pneumatique (100), de préférence un système de freinage antiblocage (ABS) (100), comprenant la valve relais (126) selon l'une quelconque des revendications susmentionnées.

9. Véhicule utilitaire comprenant le système de freinage pneumatique (100) selon la revendication 8.
